# EUROPÄISCHE PATENTSCHRIFT

(11) **EP 2 925 098 B1**
(45) Veröffentlichungstag und Bekanntmachung des Hinweises auf die Patenterteilung: **22.02.2017**
(21) Anmeldenummer: 15161089.6
(22) Anmeldetag: 26.03.2015
(51) Int. Cl.: H05B 37/02, H04W 4/02

(54) **LEUCHTE AUSGESTALTET ZUR KOMMUNIKATION MIT MOBILEM GERÄT**
LUMINAIRE ADAPTED TO COMMUNICATE WITH MOBILE DEVICE
ÉCLAIRAGE ADAPTÉ POUR COMMUNIQUER AVEC UN DISPOSITIF MOBILE

(30) Priorität: 28.03.2014 CH 4802014
(43) Veröffentlichungstag der Anmeldung: 30.09.2015
(73) Patentinhaber: Regent Beleuchtungskörper AG, 4018 Basel (CH)
(72) Erfinder: Morf, Beat, 4450 Sissach (CH); Griessmann, Marcel, 68700 Steinbach (FR)
(74) Vertreter: Braun, André jr.

(56) Entgegenhaltungen:
- DE-A1-102011 086 702
- US-A1- 2010 181 938
- US-A1- 2014 028 210

## Beschreibung

### Technisches Gebiet

Die Erfindung betrifft eine Leuchte mit einem Leuchtmittel, einer Stelleinrichtung zum Einstellen von Abstrahlcharakteristika der Leuchte, einem Präsenzdetektor und einer mit dem Präsenzdetektor und der Stelleinrichtung verbundenen Auswerteeinheit, wobei die Auswerteeinheit dazu ausgestaltet ist, über den Präsenzdetektor eine Präsenz eines Nutzers festzustellen. Solche Leuchten können zum automatisiert angepassten Beleuchten von Räumen und Ausleuchten von Oberflächen eingesetzt werden.

### Stand der Technik

Zur Beleuchtung in Innen- und Aussenräumen werden verschiedenartige Leuchten eingesetzt, die als Wand-, Decken- oder Pendelleuchten an einer Decke oder einer Wand montiert sind oder die als Stehleuchte frei auf dem Boden positioniert sind. Dabei ist es häufig wichtig, dass die Leuchten eine bestimmte Fläche möglichst ideal ausleuchten. Beispielsweise ist es in Büros von Bedeutung, dass Arbeitsflächen wie unter anderem Schreibtischoberflächen gut beleuchtet sind, damit ein angenehmes und ergonomisches Arbeiten möglich ist. Zu diesem Zweck wird angestrebt, eine vordefinierte bevorzugte Ausleuchtung der Arbeitsfläche zu erreichen.

Um eine Lichtverteilungskurve (LVK) definieren zu können, sind moderne Leuchten häufig mit vielfältigen Einstellmöglichkeiten ausgestattet. So können die Leuchten von einem Nutzer eingestellt werden. Beispielsweise können solche Steuerungen über einen Bewegungsmelder erfasste Signale als Umgebungsparameter auswerten, wobei eine erkannte Bewegung so interpretiert wird, dass sich eine Person in der Umgebung der Leuchte befindet. Wird eine Bewegung erkannt, so kann die Steuerung die Leuchte einschalten beziehungsweise die Leuchte eingeschaltet lassen. Wird über einen bestimmten vordefinierten Zeitraum keine Bewegung registriert, so kann die Steuerung die Leuchte ausschalten. Oder in einem anderen Beispiel kann eine solche Steuerung ein über einen Helligkeitssensor erfasstes Signal als Umgebungsparameter auswerten. Dabei kann die Steuerung die Helligkeit des von der Leuchte abgestrahlten Lichts der erfassten Umgebungshelligkeit anpassen.

Bei einstellbaren Leuchten werden typischerweise vom Nutzer persönliche Einstellungen vorgenommen, um die Abstrahlcharakteristik individuell auf seine Bedürfnisse anzupassen. Beispielsweise können Nutzer ihre bevorzugte Helligkeit, Fokus und/oder Lichtfarbe einstellen.

Dabei ist es in Umgebungen, in denen die Nutzer der Leuchten wechseln häufig umständlich, die Leuchten jeweils neu einzustellen. Insbesondere falls die Leuchten auf vielfältige Weise einstellbar sind, können solche ändernden individuellen Einstellungen aufwendig und umständlich sein. Beispielsweise in Arbeitsplatzumgebungen, in denen der Arbeitsplatz eines Nutzers regelmässig ändert (Shared Desk), kann das vorstehende Problem akzentuiert auftreten.

D1 (DE 10 2011 086 702 A1) offenbart eine Leuchte mit einer Kommunikationsschnittstelle nach dem Oberbegriff des Anspruchs 1.

Vor diesem Hintergrund ist es die Aufgabe der nachfolgenden Erfindung, eine Leuchte beziehungsweise ein Leuchtensystem vorzuschlagen, die beziehungsweise das eine komfortable individuelle beziehungsweise persönliche Einstellung ermöglicht.

### Darstellung der Erfindung

Die Aufgabe wird erfindungsgemäss durch eine Leuchte gelöst, wie sie im unabhängigen Anspruch 1 definiert ist, und durch ein Leuchtensystem, wie es im unabhängigen Anspruch 12 definiert ist. Vorteilhafte Ausführungsvarianten der erfindungsgemässen Leuchte ergeben sich aus den abhängigen Ansprüchen.

Das Wesen der Erfindung besteht im Folgenden: Eine Leuchte umfasst ein oder mehrere Leuchtmittel, eine Stelleinrichtung zum Einstellen von Abstrahlcharakteristika der Leuchte, einen Präsenzdetektor, optional einen Helligkeitssensor, ein Funkmodul und eine mit dem Präsenzdetektor, dem Funkmodul, gegebenenfalls mit dem Helligkeitssensor und der Stelleinrichtung verbundene Auswerteeinheit. Die Auswerteeinheit der Leuchte ist dazu ausgestaltet, über den Präsenzdetektor eine Präsenz eines Nutzers festzustellen. Weiter ist die Auswerteeinheit der Leuchte dazu ausgestaltet, einen Kommunikationskanal über das Funkmodul der Leuchte und ein Funkmodul eines dem Nutzer zugeordneten mobilen Geräts herzustellen, in einem Datenspeicher des mobilen Geräts gespeicherte persönliche Leuchtenparameter des Nutzers über den Kommunikationskanal zu erhalten und die Leuchte über ihre Stelleinrichtung gemäss der persönlichen Leuchtenparameter des Nutzers einzustellen.

Die Leuchte kann eine Pendel-, Wand-, Deckenbeziehungsweise Hängeleuchte oder insbesondere eine Stehleuchte sein. Das Leuchtmittel kann beispielsweise ein LED-Leuchtmittel mit einer Leuchtdiode, eine Platine mit einer Mehrzahl von Leuchtdioden beziehungsweise ein LED-Cluster, eine Glühbirne oder eine Leuchtröhre sein.

Der Begriff "Abstrahlcharakteristika" im Zusammenhang mit der erfindungsgemässen Leuchte bezieht sich auf Eigenschaften des mittels der Leuchte beziehungsweise des Leuchtmittels erzeugten Lichts wie beispielsweise dessen Streuung, Intensität/Helligkeit, Dämpfung, Strahlrichtung, Fokussierung und/oder Farbe beziehungsweise Ton. Gewisse oder alle der Abstrahlcharakteristika können eine Lichtverteilungskurve (LVK) der Leuchte auf der Oberfläche festlegen. Die Stelleinrichtung kann einen Refraktor, einen Reflektor, einen Helligkeitsregler und/oder eine Linse umfassen.

Der Begriff "Präsenz" bezieht sich im Kontext der Erfindung auf die Anwesenheit des Nutzers in einer Umgebung der Leuchte. Der Begriff "Umgebung der Leuchte" kann sich in diesem Zusammenhang auf einen Einflussbereich der Leuchte beziehungsweise einen Einflussbereich auf die Leuchte beziehen. Insbesondere kann er sich auf einen Bereich beziehen, der für eine Einstellung der Leuchte wie beispielsweise deren LVK oder deren Helligkeit von Bedeutung ist.

Über das Feststellen der Präsenz kann ermittelt werden, dass ein Benutzer sich nahe der Leuchte beziehungsweise im Wirkungsbereich der Leuchte befindet. Beispielsweise kann der Präsenzmelder einen Bereich bei der beziehungsweise um die Leuchte erfassen, in dem sich der Nutzer befinden muss, damit die Leuchte entsprechend seiner persönlichen Präferenzen eingestellt wird.

Die Auswerteeinheit kann eine Recheneinheit mit einem Prozessor, einem Arbeitsspeicher und einem Datenspeicher umfassen. Dabei kann die Auswerteeinheit erfindungsgemäss ausgestaltet sein, indem die Recheneinheit entsprechend programmiert ist. Dazu kann die Recheneinheit beispielsweise ein Programm ausführen. Alternativ oder zusätzlich zu der Recheneinheit kann die Auswerteeinheit eine entsprechend ausgestaltete Schaltung aufweisen.

Das dem Nutzer zugeordnete mobile Gerät kann beispielsweise ein Smartphone, ein Tablet, eine Smartwatch, ein Laptop oder ein ähnliches Gerät des Nutzers sein. Das mobile Gerät kann ein Computerprogram beziehungsweise eine Software ausführen, über die der Nutzer seine persönlichen Leuchtenparameter einstellen kann. Diese Software kann erlauben, die Leuchtenparameter anzupassen, während ein Kommunikationskanal zwischen mobilem Gerät und Leuchte hergestellt ist oder sie unabhängig vom Kommunikationskanal zu definieren und zu speichern.

Die erfindungsgemässe Leuchte ermöglicht, dass ihre Abstrahlcharakteristika automatisiert persönlich eingestellt werden, ohne dass der Nutzer selbst unmittelbar eine Einstellung vornehmen muss. Vielmehr kann der Nutzer auf seinem persönlichen Gerät seine bevorzugten Einstellungen vornehmen und darauf speichern. Begibt sich der Nutzer dann in die Umgebung der Leuchte, stellt diese automatisch eine Verbindung mit dem persönlichen Gerät und tritt mit diesem in Verbindung. Die persönlichen Leuchtenparameter wie beispielsweise Helligkeit, Fokus, Lichtfarbe etc. können auf die Leuchte übertragen werden und die Auswerteeinheit kann die entsprechenden Einstellungen der Leuchte vornehmen.

Das Funkmodul kann fest in der Leuchte selbst eingebaut beziehungsweise darin integriert oder flexibel daran montiert sein. Ein flexibel montiertes Funkmodul ermöglicht ein Nachrüsten von Leuchten. Das Funkmodul kann ein beliebiges Funkmodul zur Drahtloskommuniaktion wie beispielsweise ein Wireless Local Area Network Modul (WLAN-Modul) oder ein Infrarot-Funkmodul sein. Vorzugsweise ist das Funkmodul ein Bluetooth-Modul und insbesondere ein Bluetooth-Low-Energy-Modul.

Unter dem Begriff "Bluetooth" wird hier ein durch die Bluetooth Special Interest Group (SIG) entwickelter Industriestandard gemäss 802.15.1 des Institute of Electrical and Electronics Engineers (IEEE) für die Datenübertragung zwischen Geräten über verhältnismässig kurze Distanz per Funktechnik verstanden. Dabei sind Übertragungen von Punkt zu Punkt und Ad-hoc- oder Piconetze möglich.

Unter dem Begriff "Bluetooth Low Energy" (BLE) wird hier eine Funktechnik verstanden, mit der sich Geräte in einer Umgebung von etwa 10 Metern vernetzen lassen. Im Vergleich zu Bluetooth weist BLE einen geringeren Stromverbrauch mit einem ähnlichen Kommunikationsbereich auf. Mit einem Bluetoothbeziehungsweise BLE-Funkmodul kann eine Kommunikation zwischen Leuchte und mobilem Gerät mittels einer Bluetooth-Funktechnologie bereitgestellt werden. Dadurch können eine zweckmässige Datenrate, eine ausreichende Reichweite und eine verhältnismässig sichere und stabile Datenübertragung in einer zweckmässigen Übertragungsgeschwindigkeit gewährleistet werden. Insbesondere ist so auch eine Punkt-zu-Punkt Verbindung zwischen Leuchte und mobilem Gerät möglich, die keine weiteren Netzwerkkomponenten erfordert.

Die Auswerteeinheit der erfindungsgemässen Leuchte ist dazu ausgestaltet, ein Netzwerk mit dem Funkmodul der Leuchte und dem Funkmodul des mobilen Geräts zu bilden. Zu diesem Zweck kann der Leuchte und dem mobilen Gerät jeweils eine eindeutige Netzwerkadresse zugewiesen werden. Über die eindeutige Netzwerkadresse können die Leuchte und das mobile Gerät effizient identifiziert werden.

Dabei ist die Auswerteeinheit auch dazu ausgestaltet, den Kommunikationskanal über das Funkmodul der Leuchte und das Funkmodul des mobilen Geräts sowohl in einem zentralen Modus beziehungsweise Central-Mode und in einem peripheren Modus beziehungsweise Peripheral-Mode herzustellen.

Unter dem Begriff "zentraler Modus" beziehungsweise "Central-Mode" wird in diesem Zusammenhang verstanden, dass die Leuchte nach mobilen Geräten Ausschau hält beziehungsweise Verfügbarkeitssignale auswertet und den Kommunikationskanal initiiert, falls ein mobiles Gerät in einem peripheren Modus beziehungsweise Peripheral-Mode gefunden wird. Bei einem solchen Kommunikationskanal beziehungsweise einer solchen Verbindung kann die Leuchte als Client im Netzwerk funktionieren und das mobile Gerät als Server. Das mobile Gerät kann als Server Datendienste zur Verfügung stellen, die von der Leuchte als Client in Anspruch genommen werden, sodass die persönlichen Leuchtenparameter des Nutzers des mobilen Geräts bezogen werden können.

Unter dem Begriff "peripherer Modus" beziehungsweise "Peripheral-Mode" wird in diesem Zusammenhang verstanden, dass die Leuchte zur Verfügung steht beziehungsweise Verfügbarkeitssignale aussendet. Das mobile Gerät kann dabei Ausschau halten und den Kommunikationskanal initiieren. Bei einem solchen Kommunikationskanal beziehungsweise einer solchen Verbindung funktioniert das mobile Gerät als Client im Netzwerk und die Leuchte als Server. Die Leuchte kann als Server Datendienste zur Verfügung stellen, mittels derer das mobile Gerät die persönlichen Leuchtenparameter des Nutzers übermitteln kann.

Ein solcher Betrieb der Leuchte sowohl im Central- als auch im Peripheral-Mode ermöglicht es insbesondere mobile Geräte mit unterschiedlichen Betriebssystemen zu berücksichtigen. Beispielsweise unterstützen Smartphones oder Tablets mit dem Betriebssystem iOS von Apple Inc. typischerweise den Peripheral-Mode und solche mit dem Betriebssystem Android den Central-Mode.

Dabei ist die Auswerteeinheit der Leuchte vorzugsweise dazu ausgestaltet, den Kommunikationskanal über das Funkmodul der Leuchte und das Funkmodul des mobilen Geräts abwechselnd beziehungsweise alternierend im zentralen Modus beziehungsweise Central-Mode und im peripheren Modus beziehungsweise Peripheral-Mode herzustellen. Die Leuchte kann sich jeweils eine vordefinierte Zeit lang im einen Mode und dann eine vordefinierte Zeit lang im anderen Mode befinden. Dies ermöglicht eine effiziente Herstellung des Kommunikationskanals beispielsweise in einem Zeitschlitzverfahren.

Vorzugsweise ist die Auswerteeinheit der Leuchte dazu ausgestaltet, den Kommunikationskanal über das Funkmodul der Leuchte und das Funkmodul eines nächsten mobilen Geräts herzustellen, wenn mehrere mobile Geräte gleichzeitig erreichbar sind. Auf diese Weise kann ermöglicht werden, dass die Leuchte ein mobiles Gerät dem Nutzer zuordnen kann, von dem es die Leuchtenparameter erhält beziehungsweise bezieht. Insbesondere in Umgebungen mit mehreren erfindungsgemässen Leuchten kann dadurch effizient ermöglicht werden, dass jeweils die richtigen Leuchtenparameter und zugehörigen Einstellungen der jeweiligen Leuchte und dem jeweiligen Nutzer zugeordnet werden. Dabei ist die Auswerteeinheit vorzugsweise dazu ausgestaltet, dasjenige mobile Gerät der mehreren mobilen Geräte mit der höchsten beim Funkmodul der Leuchte empfangbaren Signalstärke als das nächste mobile Gerät zu bestimmen.

Der Präsenzdetektor der erfindungsgemässen Leuchte kann ein beliebiger Detektor sein, mit dem sich die Präsenz des Nutzers feststellen lässt. Beispielsweise kann der Präsenzdetektor eine Berührungseinrichtung sein, die der Nutzer bei Bedarf berührt, um seine Präsenz anzugeben. Oder der Präsenzdetektor kann einen Bewegungsmelder umfassen, mit dem sich eine Bewegung des Nutzers in der Umgebung feststellen lässt. Oder der Präsenzdetektor kann einen Ultraschallsensor, einen Radarsensor und/oder eine bildverarbeitende Kamera umfassen.

Vorzugsweise umfasst der Präsenzdetektor einen Infrarotbewegungsmelder. Mittels eines solchen Infrarotbewegungsmelders beziehungsweise Passive-Infrared-Sensors (PIR-Sensors) kann eine Temperaturänderung bewirkt durch eine Strahlungsflussänderung hauptsächlich durch Wärmestrahlung im mittleren Infrarot von Menschen beziehungsweise dem Nutzer in seiner näheren Umgebung festgestellt werden. Ein solcher Bewegungsmelder kann dazu ausgestaltet sein, nicht auf statische Wärmeunterschiede, die auf natürliche Weise wie beispielsweise Sonneneinstrahlung hervorgerufen werden, zu reagieren, sondern auf ändernde Wärmeunterschiede wie beispielsweise, wenn ein Mensch in den Detektionsbereich des Sensors eintritt. Mit einem solchen Präsenzdetektor mit einem Infrarotbewegungsmelder kann der Präsenzdetektor einfach und effizient implementiert sein.

Vorzugsweise ist die Auswerteeinheit der Leuchte dazu ausgestaltet, den Kommunikationskanal über das Funkmodul der Leuchte und das Funkmodul des mobilen Geräts nur herzustellen, wenn eine Präsenz des Nutzers festgestellt ist. Dies ermöglicht eine Verwendung einer Funktechnologie für die Kommunikation zwischen mobilem Gerät und Leuchte, die eine grössere Reichweite hat als der Präsenzdetektor. Insbesondere kann in einer solchen Ausgestaltung verhindert werden, dass die Leuchte beispielsweise bei vorbeigehenden oder etwas entfernter angeordneten mobilen Geräten laufend neu eingestellt wird.

Vorzugsweise ist die Auswerteeinheit der Leuchte dazu ausgestaltet, die Leuchte in einen Ausgangszustand zurückzusetzen, wenn der Kommunikationskanal für eine vordefinierte Zeit unterbrochen ist. Unter "zurücksetzen in den Ausgangszustand" kann in diesem Zusammenhang das Einstellen der Leuchte auf Grundparameter unabhängig von den persönlichen Parametern des Nutzers verstanden werden. Dies kann beispielsweise erfolgen, wenn der Nutzer sein mobiles Gerät ausschaltet oder die Umgebung der Leuchte verlässt. Die vordefinierte Zeit kann beispielsweise zehn Minuten betragen.

Vorzugsweise ist die Auswerteeinheit der Leuchte dazu ausgestaltet, die Leuchte in einen Ausgangszustand zurückzusetzen oder auszuschalten, wenn für eine vordefinierte Zeit keine Präsenz des Nutzers festgestellt ist. Dies kann beispielsweise erfolgen, wenn der Nutzer die Umgebung der Leuchte verlässt. Die vordefinierte Zeit kann beispielsweise zehn Minuten betragen. Insbesondere in Kombination mit dem vorstehend beschriebenen Zurückstellen bei unterbrochenem Kommunikationskanal kann dies einen effizienten Betrieb der Leuchte ermöglichen.

Ein weiterer Aspekt der Erfindung betrifft ein Leuchtensystem, das eine Leuchte wie vorstehend beschrieben und ein einem Nutzer zugeordnetes mobiles Gerät mit einem Funkmodul und einem Datenspeicher, in dem persönliche Leuchtenparameter des Nutzers gespeichert sind, umfasst. Ein solches Leuchtensystem ermöglicht eine effiziente Implementierung der erfindungsgemässen Leuchte oder einer Mehrzahl davon und insbesondere der Effekte und Vorteile davon. Das persönliche Gerät kann insbesondere ein Computerprogram ausführen, das dazu ausgestaltet ist, persönliche Einstellung der Leuchte zu erfassen und im Datenspeicher zu speichern. Das Computerprogram kann sowohl im Vordergrund laufen, so dass der Nutzer es bedienen kann, als auch im Hintergrund, so dass eine Kommunikation mit der Leuchte möglich ist, auch wenn das Smartphone nicht oder für andere Zwecke bedient wird.

### Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnungen. Insbesondere wird im Folgenden die erfindungsgemässe Leuchte unter Bezugnahme auf die beigefügten Zeichnungen anhand von Ausführungsbeispielen detaillierter beschrieben. Es zeigen:
- Fig. 1: eine perspektivische Ansicht eines Ausführungsbeispiels eines erfindungsgemässen Leuchtensystems mit einem Ausführungsbeispiel von mehreren erfindungsgemässen Leuchten; und
- Fig. 2: ein Blockdiagram eines Ablaufs im Betrieb einer der Leuchten von Fig. 1.

### Weg(e) zur Ausführung der Erfindung

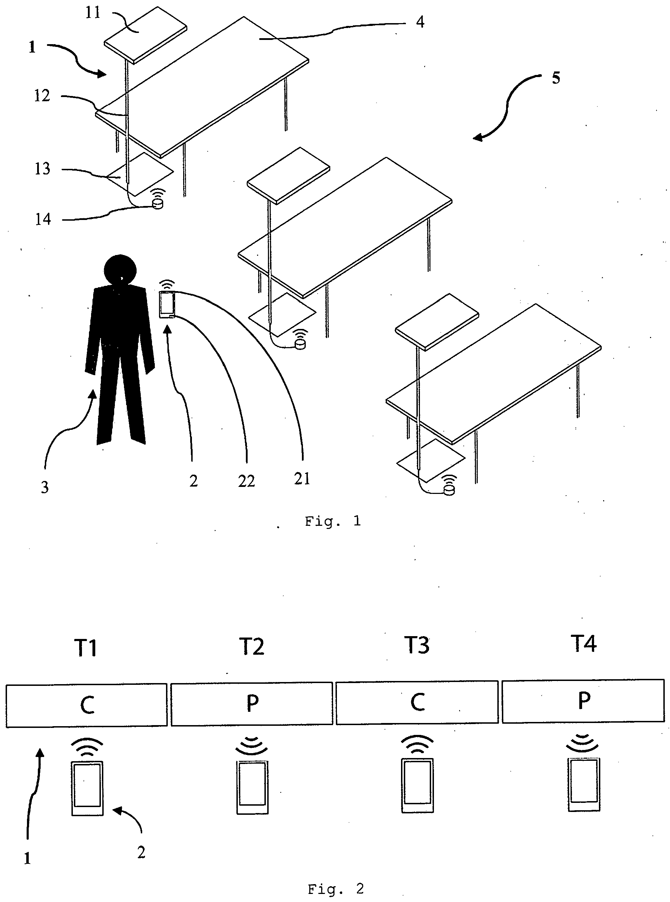

Fig. 1 zeigt ein Ausführungsbeispiel eines erfindungsgemässen Leuchtensystems 5 in einer Shared-Desk-Umgebung, in der beispielsweise in einem Grossraumbüro drei Arbeitsplätze mit jeweils einem Schreibtisch 4 vorgesehen sind. Das Leuchtensystem 5 umfasst drei Stehleuchten 1, wobei jeweils eine Stehleuchte 1 einem Schreibtisch 4 zugeordnet ist. Die Stehleuchten 1 weisen jeweils ein Leuchtengehäuse 11, eine Ständerstange 12 und einen Fuss 13 auf. Im Leuchtengehäuse 11 ist ein Leuchtmittel angeordnet, mit dem die Arbeitsoberfläche des zugehörigen Schreibtischs 4 ausgeleuchtet werden kann.

Jede der Leuchten 1 umfasst weiter eine Stelleinrichtung mit einem Helligkeits-, einem Fokus- und einem Richtungsregler zum Einstellen von Abstrahlcharakteristika der Leuchte 1. Im Leuchtengehäuse 11 jeder Leuchte 1 ist ein Präsenzdetektor mit einem Infrarotbewegungsmelder vorgesehen. Die Stelleinrichtungen und die Präsenzdetektoren der Leuchten 1 sind jeweils mit einer im Leuchtengehäuse 11 angeordneten Auswerteeinheit verbunden.

Jede der Leuchten 1 ist mit einem Bluetooth-Low-Energy-Modul (BLE-Modul) 14 als Funkmodul ausgerüstet, das neben dem Fuss 13 der zugehörigen Leuchte 1 liegt und mit der Auswerteeinheit der zugehörigen Leuchte 1 verbunden ist. Die Auswerteeinheiten der Leuchten 1 umfassen jeweils einen Prozessor, einen Arbeitsspeicher und einen Datenspeicher.

Die Nutzer 3 des Leuchtensystems 5, von denen in Fig. 1 einer dargestellt ist, besitzen ein Smartphone 2 als persönliches mobiles Gerät. Das Smartphone 2 weist ein BLE-Modul 21, einen Prozessor, einen Arbeitsspeicher und einen Datenspeicher 22 auf. Auf dem Smartphone 2 wird ein Computerprogram beziehungsweise eine App ausgeführt, mit welcher der Nutzer 3 seine bevorzugten persönlichen Einstellungen der Leuchten 1 vornehmen kann. Er kann dies sowohl unabhängig von den Leuchten 1 (offline) oder wie unten beschrieben mit einer der Leuchten 1 verbunden (online) tun. Die persönlichen Einstellungen des Nutzers 3 werden von der App als persönliche Leuchtenparameter im Datenspeicher 22 des Smartphones 2 gespeichert.

Die App läuft auf dem Smartphone 2 sowohl im Vordergrund wie auch im Hintergrund. Im Vordergrund bedeutet, dass die App vom Nutzer bedient werden kann. Läuft die App im Hintergrund kann das Smartphone für andere Anwendungen genutzt werden oder im Standby sein, wobei gleichzeitig die notwendigen Dienste für die Kommunikation mit den Leuchten 1 ausgeführt wird.

Weiter kann die App über einen geschützten Administratorenbereich verfügen, der geschulten Fachleuten vorbehalten ist. Im Administratorenbereich können servicetechnische Vorgänge an den Leuchten 1 ausgeführt werden. Beispielsweise können über den Administratorenbereich der App spezifische Leuchtengrundparameter abgefragt und konfiguriert werden. Oder es können Aktualisierungen an der Firmware der Leuchten 1 ausgeführt werden.

Die Auswerteeinheit jeder Leuchte 1 ist so programmiert, dass mittels des Infrarotbewegungsmelders des Präsenzdetektors eine Anwesenheit des Nutzers 3 am Schreibtisch 4 automatisch detektiert wird. Der Nutzer 3 setzt sich also einfach an einen beliebigen der drei Schreibtische 4 und die zugehörige Leuchte 1 des Leuchtensystems 5 stellt seine Anwesenheit fest.

Die Auswerteeinheit jeder Leuchte 1 ist weiter so programmiert, dass bei einer detektierten Anwesenheit des Nutzers 3 ein Kommunikationskanal über das BLE-Modul 14 der Leuchte 1 und das BLE-Modul 21 des Smartphones 2 hergestellt wird. Dazu ist die Auswerteeinheit dazu programmiert, das in Fig. 2 gezeigte Zeitschlitzverfahren wie folgt auszuführen. Während eines ersten vordefinierten Zeitraums T1 wird die Leuchte 1 in einem zentralen Modus beziehungsweise Central-Mode (C) betrieben. In diesem Central-Mode (C) ist die Leuchte 1 auf Empfang geschaltet, sodass mittels ihres BLE-Moduls über BLE-Module 21 von Smartphones 2 gesendete Signale beziehungsweise Verfügbarkeitssignale empfangen werden können. Im Central-Mode (C) ist die Leuchte 1 in der Lage, eine Verbindung beziehungsweise einen Kommunikationskanal mit einem in einem peripheren Modus beziehungsweise Peripheral-Mode betriebenen Smartphone 2 herzustellen.

Während eines zweiten vordefinierten Zeitraums T2 wird die Leuchte 1 in einem peripheren Modus beziehungsweise Peripheral-Mode (P) betrieben. In diesem Peripheral-Mode (P) ist die Leuchte 1 auf Sendung geschaltet, sodass mittels ihres BLE-Moduls Verfügbarkeitssignale an Smartphones 2 gesendet werden. In diesem Peripheral-Mode (P) ist die Leuchte 1 in der Lage, eine Verbindung beziehungsweise einen Kommunikationskanal mit einem in einem zentralen Modus beziehungsweise Central-Mode betriebenen Smartphone 2 herzustellen. Während eines dritten Zeitraums T3 wird die Leuchte wieder im Central-Mode (C), während eines vierten Zeitraums in einem Peripheral-Mode (P) betrieben und so weiter, bis ein Kommunikationskanal mit einem Smartphone 2 hergestellt ist.

Die Auswerteeinheit jeder Leuchte 1 ist so programmiert, dass, falls beim vorstehenden Zeitschlitzverfahren mehrere Smartphones 2 erkannt werden, ein Kommunikationskanal mit dem Smartphone 2 hergestellt wird, bei dem das stärkste Signal vorhanden ist. Zur Herstellung des Kommunikationskanals wird mittels der Auswerteeinheit ein Netzwerk mit dem Smartphone 2 und der Leuchte 1 als Netzwerkknoten aufgebaut. Die Leuchte 1 und das Smartphone 2 erhalten in diesem Netzwerk eindeutige Adressen.

Weiter ist die Auswerteeinheit jeder Leuchte 1 so programmiert, dass bei festgestellter Anwesenheit des Nutzers 3 und bei hergestelltem Kommunikationskanal mit seinem Smartphone 2 die im Datenspeicher 22 des Smartphones 2 gespeicherten persönlichen Leuchtenparameter bezogen beziehungsweise erhalten werden. Die Auswerteeinheit stellt dann die Leuchte 1 beziehungsweise ihr Leuchtmittel über die Stelleinrichtung gemäss den persönlichen Leuchtenparametern des Nutzers 3 ein.

Im Betrieb des Leuchtensystems 5 setzt sich der Nutzer 3 also an einem beliebigen der drei Schreibtische 4 und die zugehörige Leuchte 1 wird vollautomatisch auf seine persönlichen Präferenzen eingestellt. Die Auswerteeinheit jeder Leuchte 1 ist auch dazu programmiert, den Kommunikationskanal mit dem Smartphone 2 des Nutzers 3 abzubrechen und die Leuchte 1 in ihre Ausgangsstellung mit ihren Grundeinstellungen zurückzustellen, wenn der Präsenzdetektor für zehn Minuten keine Präsenz feststellt oder wenn das BLE-Modul für zehn Minuten keine Verbindung mit dem Smartphone 2 hat. Der Nutzer 3 kann also nach Benutzung des Schreibtisches 4 beziehungsweise Arbeitsplatzes einfach den Schreibtisch 4 verlassen und die Leuchte 1 stellt sich vollautomatisch in ihre Ausgangsstellung zurück.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen von deren Merkmalen vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfassen sowie auch solche, die zusätzliche andere Merkmale umfassen.

Im Weiteren schliesst der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder - bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Leuchte (1) mit einem Leuchtmittel, einer Stelleinrichtung zum Einstellen von Abstrahlcharakteristika der Leuchte (1), einem Präsenzdetektor und einer mit dem Präsenzdetektor und der Stelleinrichtung verbundenen Auswerteeinheit, wobei die Auswerteeinheit dazu ausgestaltet ist, über den Präsenzdetektor eine Präsenz eines Nutzers (3) festzustellen, **dadurch gekennzeichnet, dass** die Leuchte (1) ein mit der Auswerteeinheit verbundenes Funkmodul (14) umfasst, wobei die Auswerteeinheit dazu ausgestaltet ist,
einen Kommunikationskanal über das Funkmodul (14) der Leuchte (1) und ein Funkmodul (21) eines dem Nutzer (3) zugeordneten mobilen Geräts (2) herzustellen,
in einem Datenspeicher des mobilen Geräts (2) gespeicherte persönliche Leuchtenparameter des Nutzers (3) über den Kommunikationskanal zu erhalten,
die Leuchte (1) über ihre Stelleinrichtung gemäss der persönlichen Leuchtenparameter des Nutzers (3) einzustellen,
ein Netzwerk mit dem Funkmodul (14) der Leuchte (1) und dem Funkmodul (21) des mobilen Geräts (2) zu bilden und
den Kommunikationskanal über das Funkmodul (14) der Leuchte (1) und das Funkmodul (21) des mobilen Geräts (2) in einem zentralen Modus (C) und in einem peripheren Modus (P) herzustellen.

2. Leuchte (1) gemäss Anspruch 1, bei der das Funkmodul (14) der Leuchte (1) ein Bluetooth-Modul und insbesondere ein Bluetooth-Low-Energy-Modul ist.

3. Leuchte (1) gemäss Anspruch 1 oder 2, bei der die Auswerteeinheit dazu ausgestaltet ist, den Kommunikationskanal über das Funkmodul (14) der Leuchte (1) und das Funkmodul (21) des mobilen Geräts (2) abwechselnd im zentralen Modus (C) und im peripheren Modus (P) herzustellen.

4. Leuchte (1) nach einem der vorangehenden Ansprüche, bei der die Auswerteeinheit dazu ausgestaltet ist, den Kommunikationskanal über das Funkmodul (14) der Leuchte (1) und das Funkmodul (21) eines nächsten mobilen Geräts (2) herzustellen, wenn mehrere mobile Geräte (2) gleichzeitig erreichbar sind.

5. Leuchte (1) nach Anspruch 4, bei der die Auswerteeinheit dazu ausgestaltet ist, dasjenige mobile Gerät (2) der mehreren mobilen Geräte (2) mit der höchsten beim Funkmodul (14) der Leuchte (1) empfangbaren Signalstärke als das nächste mobile Gerät (2) zu bestimmen.

6. Leuchte (1) nach einem der vorangehenden Ansprüche, bei der der Präsenzdetektor einen Infrarotbewegungsmelder umfasst.

7. Leuchte (1) nach einem der vorangehenden Ansprüche, bei der die Auswerteeinheit dazu ausgestaltet ist, den Kommunikationskanal über das Funkmodul (14) der Leuchte (1) und das Funkmodul (21) des mobilen Geräts (2) nur herzustellen, wenn eine Präsenz des Nutzers (3) festgestellt ist.

8. Leuchte (1) nach einem der vorangehenden Ansprüche, bei der die Auswerteeinheit dazu ausgestaltet ist, die Leuchte (1) in einen Ausgangszustand zurückzusetzen oder auszuschalten, wenn der Kommunikationskanal für eine vordefinierte Zeit unterbrochen ist.

9. Leuchte (1) nach einem der vorangehenden Ansprüche, bei der die Auswerteeinheit dazu ausgestaltet ist, die Leuchte (1) in einen Ausgangszustand zurückzusetzen oder auszuschalten, wenn für eine vordefinierte Zeit keine Präsenz des Nutzers (3) festgestellt ist.

10. Leuchtensystem umfassend
eine Leuchte (1) nach einem der vorangehenden Ansprüche und
ein einem Nutzer (3) zugeordnetes mobiles Gerät (2) mit einem Funkmodul (21) und einem Datenspeicher (22), in dem persönliche Leuchtenparameter des Nutzers (3) gespeichert sind.

## Claims

1. A light (1) with a lightbulb, an adjustment device for setting the light distribution characteristics for the light (1), a presence detector and an evaluation unit connected to the presence detector and the adjustment device, wherein the evaluation unit is designed to determine the presence of a user (3) through the presence detector, **characterised in that** the light (1) comprises a remote module (14) connected to the evaluation unit, wherein the evaluation unit is designed to
establish a communication channel via the remote module (14) in the light (1) and a remote module (21) in a mobile device (2) assigned to the user (3),
receive personal lighting parameters for the user (3) saved in a memory on the mobile device (2) via the communication channel,
set the light (1) according to the personal lighting parameters for the user (3) using its adjustment device,
form a network with the remote module (14) in the light (1) and the remote module (21) in the mobile device (2), and
establish the communication channel through the remote module (14) in the light (1) and the remote module (21) in the mobile device (2) in a central mode (C) and in a peripheral mode (P).

2. The light (1) according to claim 1, in which the remote module (14) in the light (1) is a Bluetooth module, and in particular a Bluetooth low-energy module.

3. The light (1) according to claim 1 or 2, in which the evaluation unit is designed to establish the communication channel through the remote module (14) in the light (1) and the remote module (21) in the mobile device (2) alternately in central mode (C) and in peripheral mode (P).

4. The light (1) according to any of the preceding claims, in which the evaluation unit is designed to establish the communication channel through the remote module (14) in the light (1) and the remote module (21) in a nearest mobile device (2) if multiple mobile devices (2) can be reached simultaneously.

5. A light (1) according to claim 4, in which the evaluation unit is designed to define the mobile device (2) among the multiple mobile devices (2) with the strongest signal strength that can be received by the remote module (14) in the light (1) as the nearest mobile device (2).

6. The light (1) according to any of the preceding claims, in which the presence detector comprises an infrared motion detector.

7. The light (1) according to any of the preceding claims, in which the evaluation unit is designed only to establish the communication channel through the remote module (14) in the light (1) and the remote module (21) in the mobile device (2) if the presence of the user (3) is determined.

8. The light (1) according to any of the preceding claims, in which the evaluation unit is designed to reset the light (1) to its initial state or switch it off if the communication channel is interrupted for a predefined period of time.

9. The light (1) according to any of the preceding claims, in which the evaluation unit is designed to reset the light (1) to its initial state or switch it off if the presence of the user (3) is not detected for a predefined period of time.

10. A lighting system comprising
a light (1) according to any of the preceding claims, and
a mobile device (2) assigned to a user (3) with a remote module (21) and a memory (22) in which the personal lighting parameters for the user (3) are saved.

## Revendications

1. Lampe (1) comprenant une lampe, un dispositif de réglage destiné à régler les caractéristiques d'émission de la lampe (1), un détecteur de présence et une unité d'évaluation reliée au détecteur de présence et au dispositif de réglage, l'unité d'évaluation étant adaptée pour détecter la présence d'un utilisateur (3) par le biais du détecteur de présence, **caractérisé en ce que** la lampe (1) comprend un module radioélectrique (14) relié à l'unité d'évaluation, l'unité d'évaluation étant configuré
pour établir un canal de communication par le biais du module radioélectrique (14) de la lampe (1) et d'un module radioélectrique (21) de l'appareil mobile (2) associé à l'utilisateur (3),
pour obtenir des paramètres d'éclairage personnels de l'utilisateur (3), mémorisés dans une mémoire de données de l'appareil mobile (2), sur le canal de communication,
pour régler la lampe (1) par le biais du dispositif de réglage en fonction des paramètres d'éclairage personnels de l'utilisateur (3),
pour former un réseau avec le module radioélectrique (14) de la lampe (1) et le module radioélectrique (21) de l'appareil mobile (2) et
pour établir le canal de communication par le biais du module radioélectrique (14) de la lampe (1) et du module radioélectrique (21) de l'appareil mobile (2) dans un mode central (C) et dans mode périphérique (P).

2. Lampe (1) selon la revendication 1, dans laquelle le module radioélectrique (14) de la lampe (1) est un module Bluetooth et en particulier un module Bluetooth à faible énergie.

3. Lampe (1) selon la revendication 1 ou 2, dans laquelle l'unité d'évaluation est configurée pour établir le canal de communication par le biais du module radioélectrique (14) de la lampe (1) et du module radioélectrique (21) de l'appareil mobile {2) alternativement dans le mode central (C) et le mode périphérique (P).

4. Lampe (1) selon l'une des revendications précédentes, dans laquelle l'unité d'évaluation est configurée pour établir le canal de communication par le biais du module radioélectrique (14) de la lampe (1) et du module radioélectrique (21) d'un appareil mobile (2) suivant lorsqu'une pluralité d'appareils mobiles (2) sont accessibles simultanément.

5. Lampe (1) selon la revendication 4, dans laquelle l'unité d'évaluation est configurée pour déterminer l'appareil mobile (2) de la pluralité d'appareils mobiles (2) dont l'intensité de signal, pouvant être reçue par module radioélectrique (14) de la lampe (1), est plus élevée que celle de l'appareil mobile (2) suivant.

6. Lampe (1) selon l'une des revendications précédentes, dans laquelle le détecteur de présence comprend un détecteur de mouvement infrarouge.

7. Lampe (1) selon l'une des revendications précédentes, dans laquelle l'unité d'évaluation est configurée pour établir le canal de communication par le biais du module radioélectrique (14) de la lampe (1) et du module radioélectrique (21) de l'appareil mobile (2) seulement lorsque la présence (3) de l'utilisateur est détectée.

8. Lampe (1) selon l'une des revendications précédentes, dans laquelle l'unité d'évaluation est configurée pour éteindre la lampe (1) ou la rallumer dans un état initial lorsque le canal de communication est interrompu pendant une durée prédéfinie.

9. Lampe (1) selon l'une des revendications précédentes, dans laquelle l'unité d'évaluation est configurée pour éteindre la lampe (1) ou la rallumer dans un état initial lorsqu'aucune présence de l'utilisateur (3) n'est détectée pendant une durée prédéfinie.

10. Système d'éclairage comprenant une lampe (1) selon l'une des revendications précédentes et un appareil mobile (2), associé à un utilisateur (3), comprenant un module radioélectrique (21) et une mémoire de données (22) dans laquelle des paramètres d'éclairage personnels de l'utilisateur (3) sont mémorisés.
